# EUROPEAN PATENT APPLICATION

(11) **EP 2 309 780 A1**
(43) Date of publication of application: **13.04.2011**
(21) Application number: 10766863.4
(22) Date of filing: 22.04.2010
(51) Int. Cl.: H04S 7/00, G11B 20/00, H04N 7/173

(54) **SOUND REPRODUCTION APPARATUS**

(30) Priority: 24.04.2009 JP 2009105988
(71) Applicant: Panasonic Corporation, Kadoma-shi Osaka 571-8501 (JP)
(72) Inventor: INOUE, Yoshifumi, Osaka 540-6207 (JP); YAMADA, Masazumi, Osaka 540-6207 (JP)
(74) Representative: Unland, Jochen Hermann
(86) International application number: PCT/JP2010/002930
(87) International publication number: WO 2010/122802

(57) **Abstract**

A sound reproduction apparatus of the present application stores the physical address value of a source device that is the device to be switched to, and references the physical address values that are parameters of CEC commands issued by other devices. In the case where the referenced physical address value matches the stored physical address value of the source device, the sound reproduction apparatus automatically switches the sound input to the sound input for the device to be switched to. In this manner, the sound reproduction apparatus can reproduce sound based on a multichannel sound signal output from the source device. Also, in the case where a user sets the source device to a viewing state through a sink device, the sound reproduction apparatus automatically switches the sound input to the sound input from the source device.

## Description

### Technical Field

The present application relates to sound reproduction apparatuses.

### Background Art

In recent years, mainly in the field of video apparatuses and audio apparatuses for consumer use, the HDMI (High-Definition Multimedia Interface) standard has become spread wide as an interface standard for connecting a video apparatus and an audio apparatus. HDMI enables transmission of non-compressed video data and audio data between digital equipment. Non-patent Document 1 and Non-patent Document 2 disclose the details of the HDMI standard.

Recently, a home theater system in which a sink device (television receiver or the like), a source device (DVD player or the like) and a sound reproduction apparatus (audio-visual amplifier or the like) are mutually connected with the use of an interface conforming to the HDMI standard that is disclosed in Non-patent Document 1 and Non-patent Document 2 has become widely used. The audio-visual amplifier has a function of outputting sound from a speaker based on sound signals sent from the DVD player or sound signals sent from the television receiver.

### Prior Art Documents

### Non-patent Documents

Non-patent Document 1: "High-Definition Multimedia Interface Specification Version 1.1", 2004
Non-patent Document 2: "ENHANCE EXTENDED DISPLAY IDENTIFICATION DATA STANDARD Release A, Revision 1 VESA", 2002

### Disclosure of Invention

### Problem to be Solved by the Invention

However, with a conventional sound reproduction apparatus in the home theater system, when the sound reproduction apparatus receives a sound signal output from a source device, the user is required to perform an operation for switching the sound input of the sound reproduction apparatus, which impairs usability.

Also, with the conventional sound reproduction apparatus of the home theater system, a sound signal output from the source device is input to an input terminal via a sink device. Therefore, the sound signal input to the input terminal of the sound reproduction apparatus is a sound signal that has been processed in the sink device. Specifically, even if the source device outputs, for example, a 5.1 channel sound signal, if the sink device cannot process the 5.1 channel sound signal but can process a 2-channel sound signal only, it is a 2-channel sound signal that is input to the sound reproduction apparatus. Accordingly, there is an issue that even if the source device and the sound reproduction apparatus support 5.1 channel sound reproduction, the 5.1 channel sound is not output.

### Means for Solving Problem

A sound reproduction apparatus of the present application can be connected, via a digital interface, to a source device that sends a video signal and a sound signal and a sink device that receives the video signal and the sound signal, and that reproduces a sound signal sent from the source device or the sink device. The sound reproduction apparatus includes one sound input terminal that can be connected to the sink device; another sound input terminal that can be connected to the source device; and a selection unit that selects one of the one sound input terminal and the other sound input terminal based on control information handled in the digital interface, and the selection unit selects the other sound input terminal in the case where the source device or the sink device has issued the control information.

### Effects of the Invention

The sound reproduction apparatus of the present application is capable of automatically switching to any arbitrary sound input among a plurality of sound inputs, thereby improving usability.

### Brief Description of Drawings

[FIG. 1] FIG. 1 is a block diagram of a video/sound reproduction system including a conventional sound reproduction apparatus.
[FIG. 2] FIG. 2 is a block diagram of a video/sound reproduction system including a sound reproduction apparatus according to an embodiment.
[FIG. 3] FIG. 3 is a flowchart illustrating an operation for establishing a viewing state through settings in a sink device.
[FIG. 4] FIG. 4 is a flowchart illustrating an operation for establishing a viewing state through operations performed on a source device.

### Description of the Invention

### Embodiment 1

### (1. Configurations of sound reproduction apparatus and video/sound reproduction system)

### (1-1. Configuration of conventional video/sound reproduction system)

Recently, mainly in the field of video apparatuses and audio apparatuses for consumer use, the HDMI standard (High-Definition Multimedia Interface) has become spread wide as an interface standard for connecting a video apparatus and an audio apparatus. HDMI enables transmission of video data and audio data in a non-compressed state.

HDMI is an interface enabling transmission of data or the like between two devices. HDMI enables unilateral data transmission from one device to the other device. Devices defined in HDMI include "Source" (hereinafter referred to as a "source device"), "Sink" (hereinafter referred to as a "sink device"), and "Repeater" (hereinafter referred to as a "repeater device"). The source device is capable of sending signals. The sink device is capable of receiving signals. The repeater device is disposed between the source device and the sink device. The repeater device is capable of receiving and sending signals. The repeater device may have a configuration including a plurality of signal input units and one signal output unit, or a configuration including one signal input unit and a plurality of signal output units. The repeater device may have a function of selecting a source device or a sink device, for example. Note that the repeater device does not simply pass signals, but is provided with the capability to serve as both sink device and source device. Thus the repeater device temporarily can decode received HDMI signals to video signals, sound signals, control signals or the like, and convert the decoded signals back to HDMI signals to output the same.

In addition to the selector function, the repeater device may have a function of outputting sound, for example. Specifically, the repeater device can convert sound signals sent from a source device (DVD player or the like) to sound with the use of a speaker provided therein, and output the sound. Accordingly, it is possible to display video with the sink device (television receiver or the like) and output sound with the repeater device, making it possible to construct a video/sound reproduction system such as a home theater system.

Also, as a standard relating to the HDMI standard, there is the CEC (Consumer Electronics Control) standard. The CEC standard is a standard for allowing the user to control the operation of one device by operating another device, by exchanging control information (hereinafter referred to as a "CEC command") between devices connected through HDMI. By the CEC command, it is possible to, for example, control powering on/off of the sink device through the source device. Furthermore, with the use of the CEC command, the repeater device can switch input selectors depending on the signal input path information of the sink device, thereby automatically switching paths of the video signal and the sound signal. The signal path is not limited to a signal path through which HDMI signals can be transmitted, and also may be a signal path through which sound signals can be transmitted.

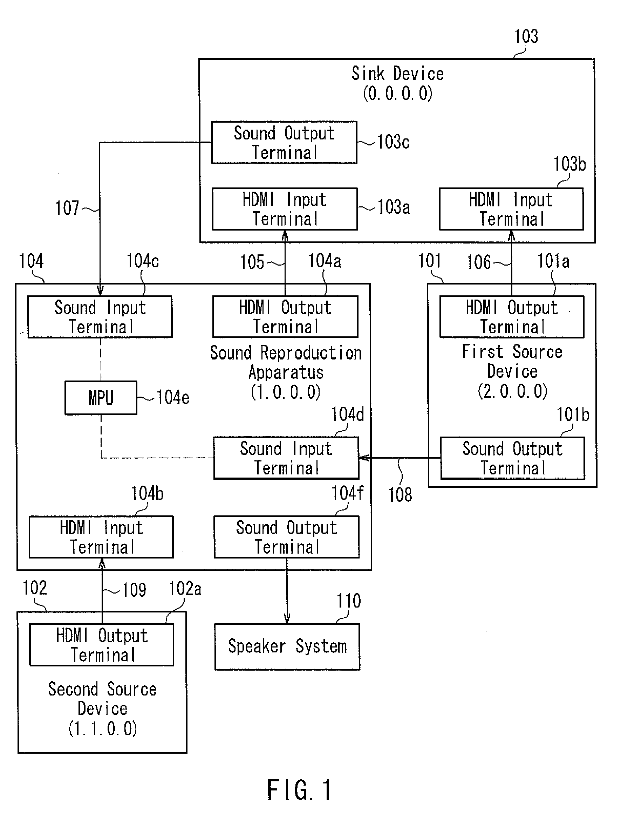

FIG. 1 is a block diagram of a conventional video/sound reproduction system. The video/sound reproduction system shown in FIG. 1 includes a first source device 101, a second source device 102, a sink device 103 and a sound reproduction apparatus 104.

The first source device 101 and the second source device 102 are for example DVD players, which can read out video/sound signals recorded on a DVD. Note that although FIG. 1 illustrates the first source device 101 and the second source device 102, the present invention can be applied as long as at least one source device is included. The first source device 101 includes an HDMI output terminal 101a and a sound output terminal 101b. The second source device 102 includes an HDMI output terminal 102a. The physical address of the first source device 101 defined in HDMI connection is [2.0.0.0], for example. The physical address of the second source device 102 defined in HDMI connection is [1.1.0.0], for example. The sound output terminal 101b is a terminal capable of outputting sound signals made up of digital data.

The sink device 103 is a television receiver capable of outputting video, for example. The sink device 103 includes HDMI input terminals 103a and 103b and a sound output terminal 103c. The physical address of the sink device 103 defined in HDMI connection is [0.0.0.0], for example. The sound output terminal 103c is a terminal capable of outputting analog signals or sound signals made up of digital data.

The sound reproduction apparatus 104 is an audio-visual amplifier capable of processing sound signals received from an outside source, for example, to output sound. The sound reproduction apparatus 104 includes an HDMI output terminal 104a, an HDMI input terminal 104b, sound input terminals 104c and 104d, and a microprocessor unit (MPU) 104e. Although not shown in the drawings, a speaker capable of outputting sound is connected to the sound reproduction apparatus 104. The physical address of the sound reproduction apparatus 104 defined in HDMI connection is [1.0.0.0], for example. The sound input terminal 104c is a terminal capable of receiving analog signals or sound signals made up of digital data. The sound input terminal 104d is a terminal capable of receiving sound signals made up of digital data.

The first source device 101 and the sink device 103 are connected by the HDMI output terminal 101a and the HDMI input terminal 103b being connected via an HDMI cable 106. The sink device 103 and the sound reproduction apparatus 104 are connected by the HDMI input terminal 103a and the HDMI output terminal 104a being connected via an HDMI cable 105 and by the sound output terminal 103c and the sound input terminal 104c being connected via a sound cable 107. The second source device 102 and the sound reproduction apparatus 104 are connected by the HDMI input terminal 104b and the HDMI output terminal 102a being connected via an HDMI cable 109. The first source device 101 and the sound reproduction apparatus 104 are connected by the sound output terminal 101b and the sound input terminal 104d being connected via a sound cable 108.

Generally, conventional automatic input switch operations follow either of the patterns (1) and (2) described below.

(1) In the case where a user watches and listens to video and sound using the second source device 102, first, the second source device 102 issues a CEC command <ActiveSource>[1.1.0.0]. The sound reproduction apparatus 104 references the CEC command issued by the second source device 102 and switches the sound input to the HDMI input terminal 104b. The sound reproduction apparatus 104 sends an HDMI signal to the sink device 103 through the HDMI output terminal 104a, the HDMI cable 105 and the HDMI input terminal 103a. The sink device 103 switches the video input to the HDMI input terminal 103a based on the HDMI signal sent from the sound reproduction apparatus 104. The sink device 103 extracts a video signal contained in the HDMI signal and displays video on the display screen based on the extracted video signal. Also, the sound reproduction apparatus 104 extracts a sound signal contained in the HDMI signal sent from the second source device 102 and outputs the extracted sound signal from a sound output terminal 104f to a speaker system 110. The speaker system 110 outputs sound based on the input sound signal. In the case where the sound signal output from the second source device 102 is a multichannel (5.1 channel, for example) signal, and also the speaker system 110 supports the multichannel signal, the speaker system 110 can output sound based on the multichannel signal.

(2) In the case where broadcast contents are received by the sink device 103, first, the sink device 103 receives airwaves of any arbitrary channel with the use of a tuner (not shown in the drawings). The sink device 103 generates a video signal and a sound signal based on the received airwaves. The sink device 103 displays video on the display screen based on the generated video signal. The sink device 103 sends the generated sound signal to the sound input terminal 104c through the sound output terminal 103c and the sound cable 107. The sink device 103 issues a CEC command <ActiveSource>[0.0.0.0]. The sound reproduction apparatus 104 references the CEC command issued by the sink device 103 and switches the sound input to the sound input terminal 104c. As a result, video of the broadcast contents received by the sink device 103 is displayed on the display screen of the sink device 103, and sound of the broadcast contents is output from the speaker system 110 connected to the sound reproduction apparatus 104.

Here, if the sink device 103 can output sound received through HDMI from its own sound output terminal, operations following patterns (3) and (4) described below are further conceivable.

(3) In the case where a user watches and listens to video and sound using the first source device 101, the sink device 103 switches the HDMI signal input to the HDMI input terminal 103b based on a CEC command <ActiveSource>[2.0.0.0] issued by the first source device 101. The sound reproduction apparatus 104 switches the sound signal input to the sound input terminal 103c based on the above CEC command. As a result, video based on the video signal output from the first source device 101 can be displayed on the display screen of the sink device 103, and sound based on the sound signal output from the first source device 101 can be output from the speaker system 110 connected to the sound reproduction apparatus 104.

(4) In the case where the first source device 101 does not support CEC, and further a user watches and listens to video and sound using the first source device 101, first, the user operates the sink device 103 to switch the HDMI input to the HDMI input terminal 103b. Next, the sink device 103 issues a CEC command <SetStreamPath> [2.0.0.0]. The sound reproduction apparatus 104 references the CEC command and switches the sound input to the sound input terminal 104c. As a result, video based on the video signal output from the first source device 101 can be displayed on the display screen of the sink device 103, and sound based on the sound signal output from the first source device 101 can be output from the speaker system 110 connected to the sound reproduction apparatus 104.

In the case where sound is output with the speaker system 110 based on a sound signal sent from the sink device 103, the sound reproduction apparatus 104 shown in FIG. 1 can switch the sound input selector automatically. However, in the case where sound is output with the speaker system 110 based on a sound signal sent from the first source device 101, it is necessary that the sound output terminal 101b of the first source device 101 and the sound input terminal 104d of the sound reproduction apparatus 104 are connected by the sound cable 108, and that the user manually switches the sound input selector of the sound reproduction apparatus 104.

In addition, in a configuration in which the sink device 103 outputs a sound signal sent from the first source device 101 from the sound output terminal 103c, even if the first source device 101 sends a multichannel sound signal, if the sink device 103 only supports a 2-channel sound signal, it is a 2-channel sound signal that is output from the sound output terminal 103c. Note that examples of multichannel sound signal schemes include AAC (Advanced Audio Codec) and AC3 (Audio Coding Number 3).

### (1-2. Configuration of video/sound reproduction system according to an embodiment)

The sound reproduction apparatus according to the present embodiment can reproduce a sound signal sent from another device connected to the sink device as multichannel sound. Also, the sound reproduction apparatus of the present embodiment can switch the sound input by a CEC command automatically.

Note that although there are techniques in which vendor-specific commands are used, standard commands defined by the CEC standard are used as CEC commands in the present embodiment.

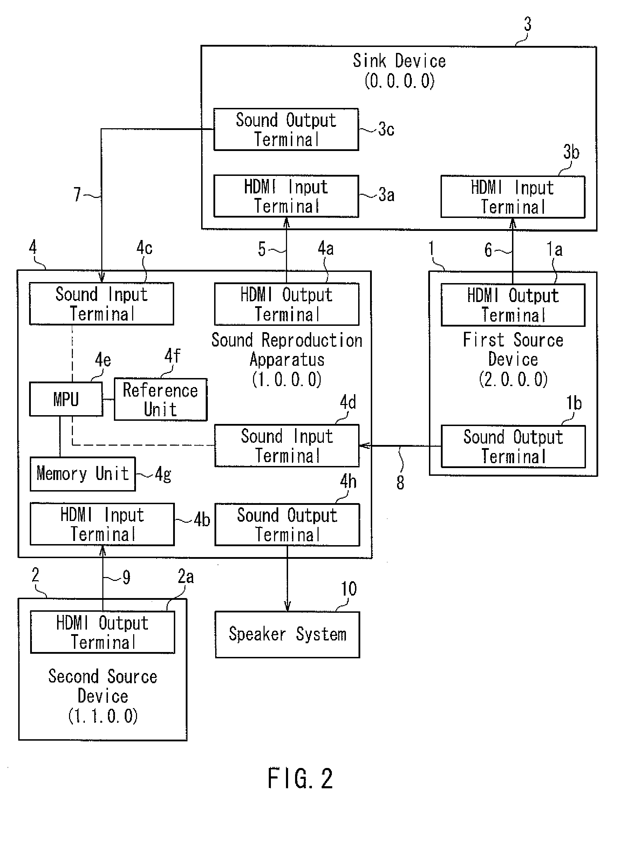

FIG. 2 is a block diagram of a video/sound reproduction system including the sound reproduction apparatus according to this embodiment. The video/sound reproduction system shown in FIG. 2 includes a first source device 1, a second source device 2, a sink device 3 and a sound reproduction apparatus 4.

The first source device 1 and the second source device 2 are, for example, DVD players, which can read out video/sound signals recorded on a DVD. Note that although FIG. 2 illustrates the first source device 1 and the second source device 2, the present invention can be applied as long as at least one source device is included. The first source device 1 includes an HDMI output terminal 1a and a sound output terminal 1b. The HDMI output terminal 1a is capable of outputting HDMI signals. The sound output terminal 1b is capable of outputting sound signals made up of digital data. The second source device 2 includes an HDMI output terminal 2a. The HDMI output terminal 2a is capable of outputting HDMI signals. The physical address of the first source device 1 defined in HDMI connection is [2.0.0.0]. The physical address of the second source device 2 defined in HDMI connection is [1.1.0.0]. These physical addresses are examples.

The sink device 3 is a television receiver capable of outputting video, for example. The sink device 3 includes HDMI input terminals 3a and 3b and a sound output terminal 3c. The HDMI input terminals 3a and 3b are capable of receiving HDMI signals. The sound output terminal 3c is capable of outputting sound signals made up of digital data. The physical address of the sink device 3 defined in HDMI connection is [0.0.0.0]. This physical address is an example.

The sound reproduction apparatus 4 is an audio-visual amplifier capable of processing sound signals received from an outside source, for example, to output sound. The sound reproduction apparatus 4 includes an HDMI output terminal 4a, an HDMI input terminal 4b, sound input terminals 4c and 4d, a microprocessor unit (MPU) 4e, a reference unit 4f, a memory unit 4g and a sound output terminal 4h. The HDMI output terminal 4a can output HDMI signals. The sound input terminals 4c and 4d can receive sound signals made up of digital data. The MPU 4e can control operation of the sound reproduction apparatus 4. The MPU 4e has a function of selecting either the sound input terminal 4c or 4d as the sound input based on the physical address value that the reference unit 4f has referenced or the physical address value stored in the memory unit 4g. A speaker system 10 capable of outputting sound based on a sound signal is connected to the sound output terminal 4h. The physical address of the sound reproduction apparatus 4 defined in HDMI connection is [1.0.0.0]. This physical address is an example.

The speaker system 10 is, for example, a 5.1 channel speaker system that includes two front speakers, two rear speakers, a center speaker and a subwoofer. Note that the number of speakers in the speaker system 10 is not limited, and the speaker system 10 may be a 2-channel stereo speaker system or may be a 7.1 channel speaker system. In the present embodiment, the speaker system 10 is connected to the sound reproduction apparatus 4 as an external device, but the speaker system 10 may be incorporated in the sound reproduction apparatus 4.

The first source device 1 and the sink device 3 are connected by the HDMI output terminal 1a and the HUMI input terminal 3b being connected via an HDMI cable 6. The sink device 3 and the sound reproduction apparatus 4 are connected by the HDMI input terminal 3a and the HDMI output terminal 4a being connected via an HDMI cable 5 and by the sound output terminal 3c and the sound input terminal 4c being connected via a sound cable 7. The second source device 2 and the sound reproduction apparatus 4 are connected by the HDMI input terminal 4b and the HDMI output terminal 2a being connected via an HDMI cable 9. The first source device 1 and the sound reproduction apparatus 4 are connected by the sound output terminal 1b and the sound input terminal 4d being connected via a sound cable 8.

The reference unit 4f constantly references the physical address values that are parameters in the CEC commands issued by the devices connected to the sound reproduction apparatus 4. The reference unit 4f writes the latest physical address value in the memory unit 4g.

The memory unit 4g stores the latest value of the physical address that the reference unit 4f monitors. When the latest physical address value is stored in the memory unit 4g, first, the sound reproduction apparatus 4, upon detecting that the sink device 3 has been connected to the first source device 1, displays a setting menu screen on a display unit (liquid crystal display, fluorescent tube display, etc.) with which it is provided. Next, upon detecting that a user has operated a remote controller and selected "AUTO" from among the setting options displayed on the setting menu screen, for example, the sound reproduction apparatus 4 sends the reference unit 4f a command to reference the latest physical address value. The reference unit 4f references the physical address values of the devices connected to the sound reproduction apparatus 4, and writes the latest value among the referenced physical address values in the memory unit 4g. Note that "AUTO" in the setting menu screen represents a setting by which the sound reproduction apparatus 4 automatically references the physical address values of other devices.

The operation for switching the input of the sink device 3 and reproducing sound signals output from the first source device 1 with the sound reproduction apparatus 4 in the video/sound reproduction system shown in FIG. 2 will be described below.

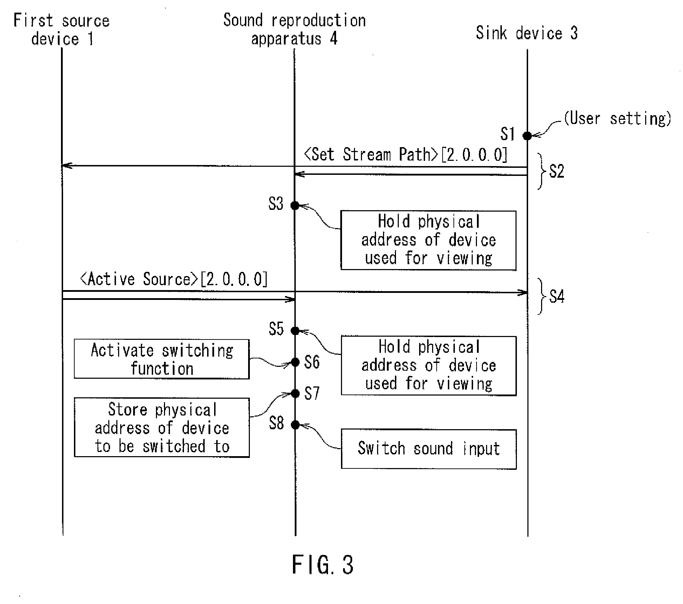

FIG. 3 is a flowchart illustrating an operation for reproducing a sound signal output from the first source device 1 with the sound reproduction apparatus 4. First, the sink device 3 switches the HDMI input to the HDMI input terminal 3b to which the first source device 1 is connected. Specifically, upon detecting that the user has operated the remote controller and selected the HUMI input terminal 3b as the HDMI input, the sink device 3 switches the HDMI input to the HDMI input terminal 3b (step S1).

Next, the sink device 3 issues a CEC command <SetStreamPath>[2.0.0.0]. The first source device 1 and the sound reproduction apparatus 4 can reference the CEC command issued by the sink device 3 (step S2).

Next, the sound reproduction apparatus 4 sends the reference unit 4f a command to write the physical address value contained in the CEC command issued by the sink device 3 in the memory unit 4g. Based on the command, the reference unit 4f writes the physical address value contained in the CEC command issued by the sink device 3 in the memory unit 4g (step S3).

Next, upon receiving the CEC command issued by the sink device 3, the first source device 1 issues a CEC command <ActiveSource>[2.0.0.0] in the case where the first source device 1 supports CEC (step S4). The sink device 3 and the sound reproduction apparatus 4 can reference the CEC command <ActiveSource> issued by the first source device 1. Note that although the first source device 1 supports CEC in the description of the present embodiment, it is not necessary that the first source device 1 support CEC. In the case where the first source device 1 does not support CEC, it does not issue the CEC command <ActiveSource>.

The sound reproduction apparatus 4, upon receiving the CEC command <SetStreamPath> issued by the sink device 3 or the CEC command <ActiveSource> issued by the first source device 1, sends the reference unit 4f a command to acquire the latest physical address value. The reference unit 4f writes the latest value among the referenced physical address values in the memory unit 4g. For example, the reference unit 4f writes the physical address value [2.0.0.0] of the first source device 1 that is the device used for viewing in the memory unit 4g (step S5).

Next, when the user operates the remote controller or the like to set the switching function to "activated" (step S6), the sound reproduction apparatus 4 controls the reference unit 4f to store the physical address value [2.0.0.0] that has been monitored in the memory unit 4g as the physical address value of the device to be switched to (step S7).

Next, when the first source device 1 (the device to be switched to that is allocated to the sound input terminal 4d) enters a viewing state, the physical address value [2.0.0.0] of the device used for viewing matches the physical address value [2.0.0.0] of the device to be switched to, and therefore the sound reproduction apparatus 4 switches the sound input to the sound input terminal 4d (step S8). The sound reproduction apparatus 4 does not switch the sound input when the physical address value of the device used for viewing and the physical address value of the device to be switched to do not match.

Note that in the case where the physical address value of the device to be switched to is unacceptable for the sound reproduction apparatus 4, the sound reproduction apparatus 4 notifies the user to the effect that the corresponding physical address value cannot be stored as the physical address value of the device to be switched to. Such a notice can be provided by, for example, displaying a prescribed message on a front panel display provided for the sound reproduction apparatus 4. Note that "the case where the physical address value of the device to be switched to is unacceptable" refers to, for example, cases where the device to be switched to is a television receiver, the physical address value of the device to be switched to is the same as the physical address value of the apparatus that is to perform switching (the sound reproduction apparatus 4), or no device has issued a CEC command containing the physical address value of the device to be switched to.

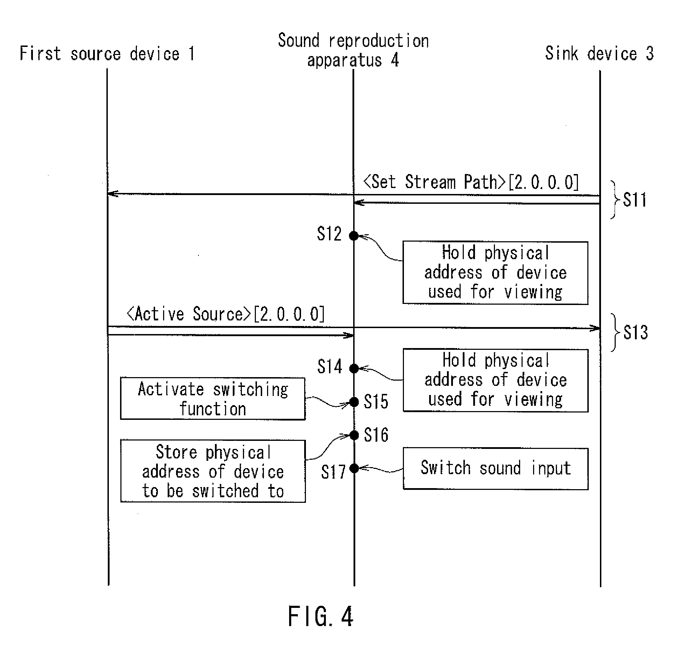

FIG. 4 is a flowchart illustrating an operation in which the first source device 1 performs control so that the sound reproduction apparatus 4 reproduces sound.

Initially, the sink device 3 issues a CEC command <SetStreamPath> [2.0.0.0]. The first source device 1 and the sound reproduction apparatus 4 can reference the CEC command <SetStreamPath> issued by the sink device 3 (step S11).

Next, the sound reproduction apparatus 4 sends the reference unit 4f a command to write the physical address value contained in the CEC command issued by the sink device 3 in the memory unit 4g. Based on the command, the reference unit 4f writes the physical address value contained in the CEC command issued by the sink device 3 in the memory unit 4g (step S12).

Next, upon receiving a sound reproduction command or a command to display the setting menu screen, for example, the first source device 1, due to an operation performed by the user on the remote controller or the like, issues a CEC command <ActiveSource>[2.0.0.0]. The sink device 3 and the sound reproduction apparatus 4 can reference the CEC command <ActiveSource> issued by the first source device 1 (step S13). Note that in the case where the first source device 1 does not support CEC, the first source device 1 does not issue the CEC command <ActiveSource>.

Next, upon receiving the CEC command <ActiveSource>, the sound reproduction apparatus 4 commands the reference unit 4f to monitor the physical address of the first source device 1 and write the latest physical address value in the memory unit 4g. The reference unit 4f monitors and updates the physical address value such that the memory unit 4g constantly stores the latest physical address value (step S14). In this case, the memory unit 4g holds the physical address value [2.0.0.0] of the device used for viewing.

Next, when the switching function is set to "activated" due to the user performing an operation on the setting menu screen (step S15), the reference unit 4f writes in the memory unit 4g the physical address value [2.0.0.0] that has been monitored as the physical address value of the device to be switched to (step S16).

Next, when the first source device 1 (the device to be switched to that is allocated to the sound input terminal 4d) enters a viewing state, the physical address value [2.0.0.0] of the device used for viewing matches the physical address value [2.0.0.0] of the device to be switched to, and therefore the sound reproduction apparatus 4 switches the sound input to the sound input terminal 4d (step S17). In the case where the physical address value of the device used for viewing and the physical address value of the device to be switched to do not match, the sound reproduction apparatus 4 does not switch the sound input.

Although the sound reproduction apparatus 4 has the functionality of a repeater including an HUMI input in the present embodiment, the present invention can be realized by a similar control method even in the case of a sound reproduction apparatus integrated into the source device.

### (3. Effects of embodiment, etc.)

By configuring the sound reproduction apparatus 4 of the present embodiment such that in the case where the physical address value issued by the first source device 1 matches the address value of the device to be switched to, the sound input is automatically switched to the sound input terminal 4d, sound based on the sound signal sent from the first source device 1 can be output from the speaker system 10 without manually switching the sound input.

Also, according to the present embodiment, the sound signal output from the first source device 1 can be sent directly to the sound reproduction apparatus 4 via the sound cable 8, and therefore in the case where the sound signal output from the first source device 1 is a multichannel sound signal such as 5.1 channel sound signal, the sound reproduction apparatus 4 can reproduce 5.1 channel sound or other sound based on the corresponding multichannel sound signal.

Furthermore, according to the present embodiment, even when the first source device 1 does not support CEC commands, the sink device 3 issues a CEC command containing the physical address value of the first source device 1 when the sink device 3 switches the HDMI input to the first source device 1, so that the sound reproduction apparatus 4 can reference the physical address of the first source device 1. By configuring the sound reproduction apparatus 4 such that in the case where the physical address value that can be referenced in the CEC command issued by the sink device 3 matches the address value of the device to be switched to, the sound input is switched automatically to the sound input terminal 4d, sound based on the sound signal sent from the first source device 1 can be output from the speaker system 10 without manually switching the sound input.

Note that the first source device 1 and the second source device 2 of the present embodiment are examples of the source device of the invention. The sink device 3 of the present embodiment is an example of the sink device of the invention. The sound input terminal 4c of the present embodiment is an example of one sound input terminal of the invention, and the sound input terminal 4d of the present embodiment is an example of another sound input terminal of the invention. The MPU 4e of the present embodiment is an example of the selection unit of the invention. The reference unit 4f of the present embodiment is an example of the reference unit of the invention. The memory unit 4g of the present embodiment is an example of the memory unit of the invention.

### Industrial Applicability

The present application is useful for sound reproduction apparatuses.

## Claims

1. A sound reproduction apparatus that can be connected, via a digital interface, to a source device that sends a video signal and a sound signal and a sink device that receives the video signal and the sound signal, and that reproduces a sound signal sent from the source device or the sink device, the sound reproduction apparatus comprising:
one sound input terminal that can be connected to the sink device;
another sound input terminal that can be connected to the source device; and
a selection unit that selects one of the one sound input terminal and the other sound input terminal based on control information handled in the digital interface,
wherein the selection unit selects the other sound input terminal in the case where the source device or the sink device has issued the control information.

2. The sound reproduction apparatus according to claim 1, further comprising:
a reference unit that references physical address information contained in the control information; and
a memory unit that stores the latest physical address information referenced by the reference unit.

3. The sound reproduction apparatus according to claim 1, further comprising:
a repeater function of sending a video signal and a sound signal from a different source device that is connected to the sound reproduction apparatus to the sink device.

4. The sound reproduction apparatus according to claim 1,
wherein the digital interface is an interface conforming to the HDMI (High-Definition Multimedia Interface) standard, and
the control information that is handled in the digital interface is control information conforming to the CEC (Consumer Electronics Control) standard of the HDMI standard.
